# EUROPEAN PATENT APPLICATION

(11) **EP 1 555 568 A1**
(43) Date of publication of application: **20.07.2005**
(21) Application number: 05250192.1
(22) Date of filing: 14.01.2005
(51) Int. Cl.: G02F 1/1335, G02B 5/136

(54) **Reflector and liquid-crystal display**

(30) Priority: 19.01.2004 JP 2004010428
(71) Applicant: ALPS ELECTRIC CO., LTD., Ota-ku Tokyo 145 (JP)
(72) Inventor: Yoshii, Katsumasa c/o Alps Electric Co. Ltd., Tokyo (JP)
(74) Representative: Kensett, John Hinton

(57) **Abstract**

A reflector includes a large number of hollow portions (12a) with arbitrary sizes randomly fabricated in an area with a predetermined unit length on one side to form a reflector piece. Reflector pieces are repeatedly fabricated to form a large reflective surface. The predetermined unit length is set from 30 to 3,000 µm. With this setting, Moire fringing can be efficiently avoided when the reflector is used as a reflector of, for example, a liquid-crystal display.

## Description

### BACKGROUND OF THE INVENTION

### 1. Field of the Invention

The present invention relates to a reflector having a substrate with a large number of hollow portions on a surface thereof and having a reflective film on the substrate, and to a liquid-crystal display (LCD) including the same.

### 2. Description of the Related Art

For portable electronic devices such as cellular phones and portable game players, the usability heavily depends on the operating time of batteries. Thus, those devices include reflective LCDs that consume lower amounts of power. Such reflective LCDs have reflective films for reflecting external light that enters at the front. Well-known forms of the reflective LCDs include a reflective LCD having a reflective film between two substrates that form a liquid-crystal panel, and a reflective LCD having a reflector with a semitransparent film at the back side of a transmissive liquid-crystal panel.

A light reflector having a substrate with a large number of hollow portions on a surface thereof and having a reflective film on a substrate is well known. Such a reflector exhibits a uniform reflectivity over the reflective surface due to the effects of the hollow portions.

A method for producing such a reflector is disclosed in Japanese Unexamined Patent Application Publication No. 2001-310334. In that publication, a master block having an uneven surface is produced with a penetrator, a substrate having a large number of hollow portions is produced by a transfer process using the master block, and then a reflective film is deposited on the substrate. In this manner, the reflector can be efficiently produced.

It is preferable that the hollow portions of the above-described reflector have arbitrary sizes and be randomly disposed since an orderly arrangement of the hollow portions generates Moire fringes when the reflector is used. Therefore, the hollow portions with arbitrary sizes are preferably disposed in a random manner over the reflective surface of a required size to avoid the Moire fringing.

However, the above-described method requires a long period of time, for example, a several months to produce a master block that has the hollow portions randomly disposed over an area corresponding to the reflective surface of the required size, and thus is impractical.

### SUMMARY OF THE INVENTION

Accordingly, it is an object of the present invention to provide a reflector that does not generate Moire fringes and that can be easily produced, and a liquid-crystal display (LCD) including the same.

To achieve the above-described object, a reflector including a substrate having a large number of minute hollow portions with arbitrary sizes, and a reflective film over the substrate is provided. The reflector is characterized in that the substrate has a plurality of surface unit areas with a predetermined unit length on one side ranging from 30 to 3,000 µm, and each unit area has the same hollow pattern.

Moreover, an LCD including the above-described reflector and an LCD panel is provided.

According to the reflector of the present invention, the reflector can efficiently avoid Moire fringing when used as a reflector of the LCD, and the time required for producing a master block used for fabricating the hollow portions by a transfer process to the reflector can be limited to a practical range. Accordingly, a reflector without generation of Moire fringes can be produced in a short period of time and at low cost.

An embodiment of the present invention will now be described, by way of example, with reference to the accompanying drawings:
Figs. 1A and 1B are partial perspective views illustrating exemplary structures of a reflector base and a reflector, respectively;
Fig. 2 is a schematic cross-sectional view of the reflector shown in Fig. 1B;
Fig. 3A is a plan view of a hollow portion formed in the reflector shown in Fig. 1B, and Fig. 3B is a cross-sectional view taken along line IIIB-IIIB in Fig. 3A;
Fig. 4 is a graph illustrating the reflectance of the reflector of the present invention;
Fig. 5 is a top plan view of the reflector of the present invention;
Fig. 6 illustrates an example of the formation of the hollow portions; and
Fig. 7 is a cross-sectional view illustrating an LCD of the present invention.

### DESCRIPTION OF THE PREFERRED EMBODIMENTS

Embodiments of the present invention will now be described with reference to the drawings.

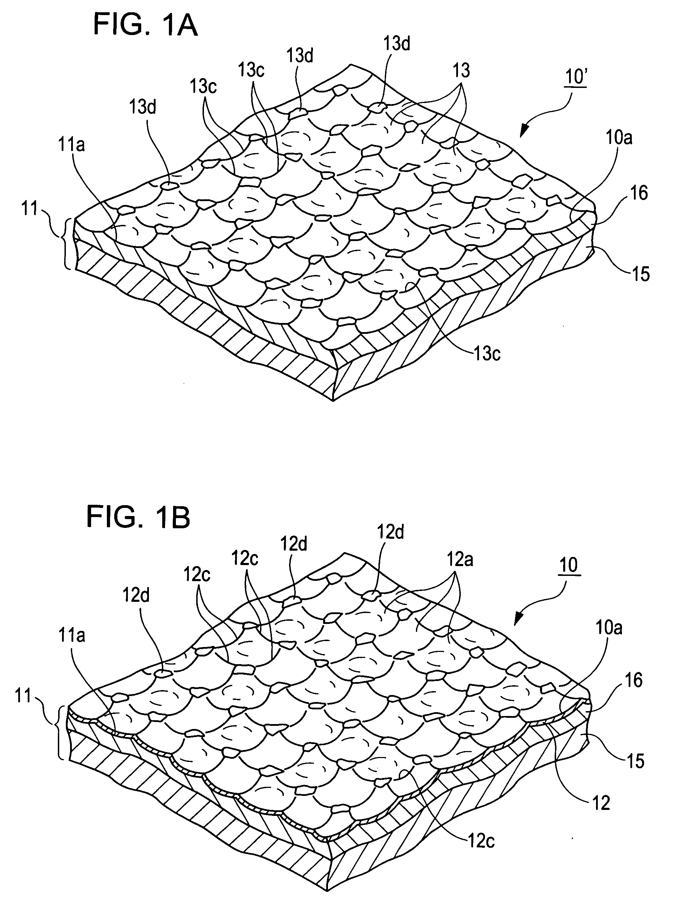

As shown in Fig. 1A, a reflector base 10' is formed of a substrate 11. The substrate 11 includes a supporting layer 15 and a resinous layer 16 laminated on the supporting layer 15. The resinous layer 16 has a plurality of hollow portions 13 on a first surface 11a thereof. As shown in Fig. 1B, a reflector 10 substantially consists of the substrate 11 and a reflective film 12 composed of Al, Ag, or the like having a high reflectivity laminated on the first surface 11a of the substrate 11. The reflective film 12 has a predetermined surface profile, i.e. hollow portions 12a, patterned after the hollow portions 13 fabricated on the resinous layer 16.

The hollow portions 12a on the reflective film 12 ensures a uniform reflectivity of the reflective film 12. To produce such a substrate 11, the supporting layer 15 may be composed of, for example, an SᵢO₂-coated glass plate, and the resinous layer 16 may be composed of an ultraviolet-curable resin. The thickness of the substrate 11 preferably ranges, for example, from 50 µm to 1 mm, and more preferably, from 100 to 700 µm.

The reflective film 12 may be formed by evaporating metals such as Al or Ag having a high reflectivity onto the first surface 11a of the substrate 11. The film thickness preferably ranges from 0.05 to 0.2 µm, and more preferably, from 0.08 to 0.15 µm. A film thickness less than 0.05 µm causes a low reflectivity, whereas a film thickness exceeding 0.2 µm causes an unnecessary increase in costs for film formation, and in addition, causes smaller hollow portions 12a patterned after the hollow portions 13.

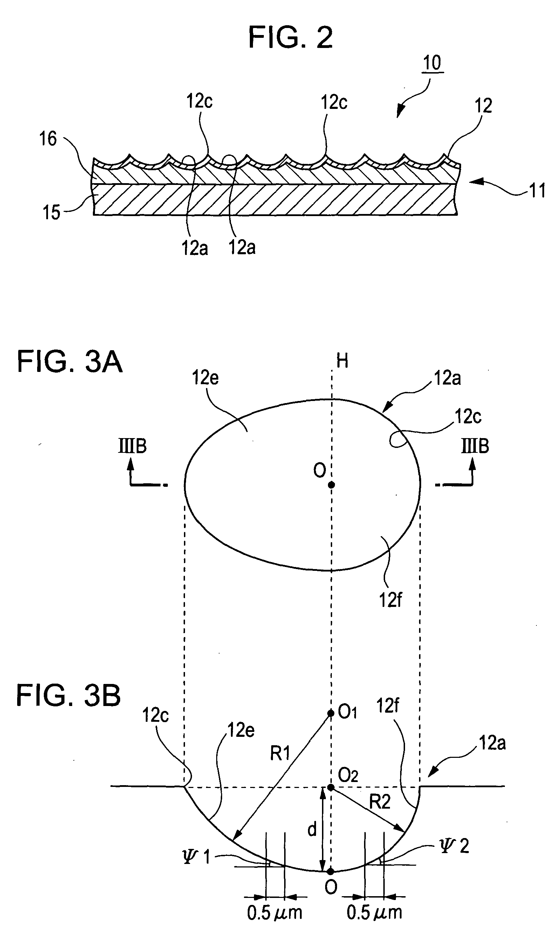

The hollow portions 13 are formed on the resinous layer 16 of the substrate 11 by embossing with negative molds (described below). As shown in Figs. 1B and 2, outlines 12c of the hollow portions 12a are linked to each other on the reflective film 12. In order to have a high reflectivity, the linked portions of the outlines 12c preferably have sharp edges, and thus form fewer flat portions 12d between the hollow portions 12a.

As shown in Figs. 3A and 3B, each of the hollow portions 12a consists of a first curved surface 12e and a second curved surface 12f. The first curved surface 12e is part of a sphere having a radius R1 centered on O₁, and the second curved surface 12f is part of a sphere having a radius R2 centered on O₂. The center O₁ of the first curved surface 12e and the center O₂ of the second curved surface 12f are on the normal line of the bottom point O of the hollow portion 12a. As shown in Fig. 3A, the first curved surface 12e and the second curved surface 12f are sectioned approximately at a line H passing through the bottom point O of the hollow portion 12a and orthogonal to line IIIB-IIIB. The depth of the hollow portion 12a may be approximately, for example, from 0.3 to 2.0 µm .

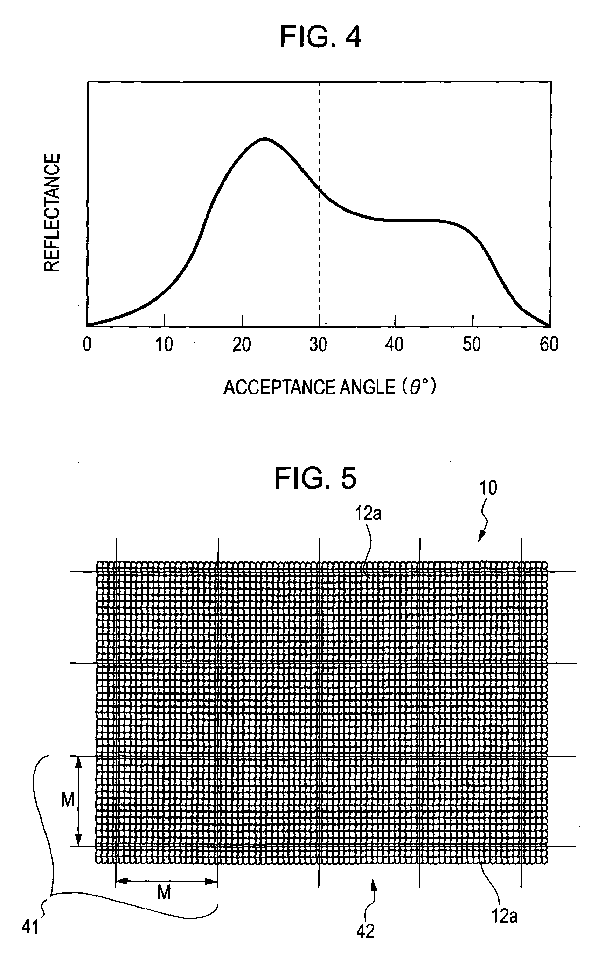

Fig. 4 shows an experimental result of the reflectance (%) of the reflector 10 when light having an incident angle of 30° is radiated on the above-described reflector 10 from the right side of Figs. 3A and 3B. The acceptance angle for the reflecting surface is defined in a range of ±30° with respect to a regular reflection angle of 30°, i.e. from 0° to 60° (0° corresponds to the normal direction to the surface of the reflector 10).

As is clear from Fig. 4, according to the reflector 10 having the above-described structure, the absolute value of the titling angle of the second curved surface 12f is relatively large since the second curved surface 12f is part of a sphere having a relatively small radius. Therefore, the reflected light is scattered in a wide range to cause a high reflectance in a wide acceptance-angle range of about 15° to 50°. On the other hand, since the first curved surface 12e is part of a sphere having a relatively large radius, the reflected light from the first curved surface 12e is scattered in a narrower range than that from the second curved surface 12f along a specific direction. Thus, the reflectance peaks at an angle smaller than 30°, which is the angle of the regular reflection, and the reflectance adjacent to the peak is also high.

As a result, the peak of the reflected light from the reflector 10 shifts toward the normal direction of the reflector 10 remote from the direction of the regular reflection to increase the reflected luminance in the normal direction of the reflector 10. Since the display surface of a liquid-crystal display (LCD) is normally tilted during use, the above-described reflector 10, when applied to a reflective layer of the LCD, improves the reflected luminance in the normal direction of the LCD, i.e. in the direction to the observer of the LCD.

In Fig. 5, the hollow portions 12a having arbitrary sizes are randomly disposed in an area having a predetermined unit length M on one side on the reflector 10 to form a reflector piece 41. Reflector pieces 41 are repeatedly fabricated on the reflector 10 to form a large reflective surface 42.

The length of the predetermined unit length M, which is the length of one side of the reflector piece 41, is set from 30 to 3,000 µm. The predetermined unit length M in this range can efficiently avoid Moire fringing when the reflector 10 is used as a reflector for, for example, an LCD. The respective lengths of two sides of the reflector piece 41 may be different in the range of 30 to 3,000 µm, and may be adjusted depending on the periodicity of an LCD panel (color filters, picture electrodes, contact holes, and the like).

When the predetermined unit length M is less than 30 µm, Moire fringes are often enhanced due to periodicity of the hollow portions 12a and the periodicity of an LCD panel. On the other hand, when the predetermined unit length M is more than 3,000 µm, a long period of time, for example, a several months, is required to produce a master block used for fabricating the hollow portions 13 by a transfer process to the reflector base 10', resulting in an impractical production method.

As described above, when the reflective surface 42 is formed by repeatedly fabricating the reflector pieces 41 having a side length of the predetermined unit length M from 30 to 3,000 µm, the Moire fringing can be efficiently avoided when the reflector 10 is used as a reflector of an LCD, and the time required for producing the master block used for fabricating the hollow portions 13 by a transfer process to the reflector base 10' can be limited to a practical range. Accordingly, the reflector 10 without generation of Moire fringes can be produced in a short period of time and at low cost.

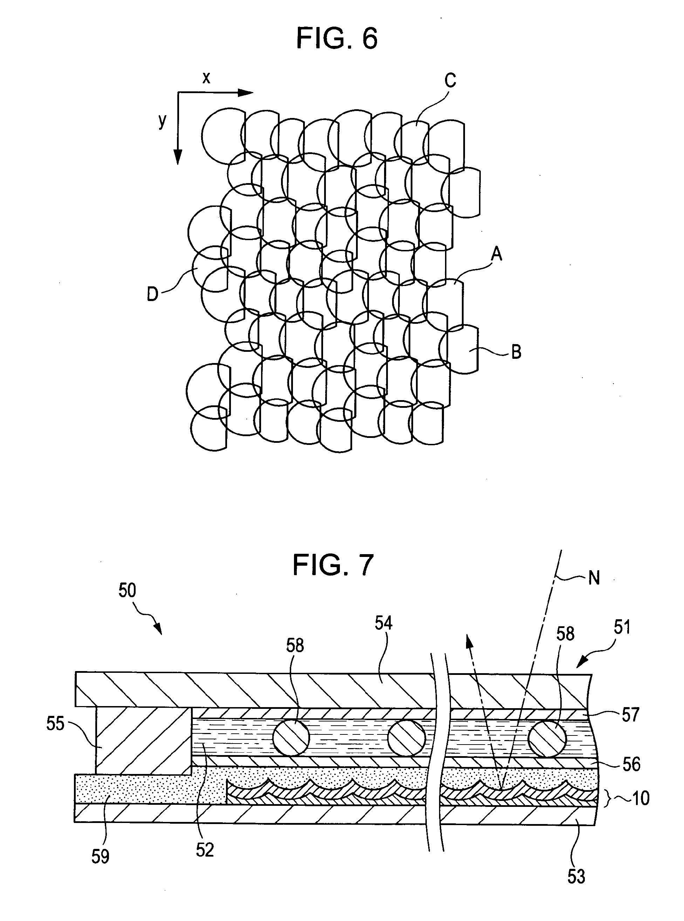

Fig. 6 illustrates an example of the formation of the hollow portions 12a on the reflector piece 41. In this example, hollow portions having four depths A, B, C, and D are randomly formed with penetrators. Shapes and coordinates of the hollow portions 12a formed in this example are shown in Table I.

**Table I.**

| Shapes and coordinates of the hollow portions | | | | |
|---|---|---|---|---|
| | Depth (µm) | Impression diameter (µm) | Coordinates | |
| | | | x | y |
| A | 1.11 | 6.58 | 0.0 | 0.0 |
| | | | 18.0 | -10.3 |
| | | | 4.4 | -17.3 |
| | | | -2.9 | -22.5 |
| B | 0.97 | 6.15 | 21.7 | -1.9 |
| | | | 25.8 | -12.3 |
| | | | 11.9 | -20.0 |
| | | | 4.1 | -26.8 |
| C | 0.83 | 5.69 | 7.8 | 0.4 |
| | | | 10.3 | -9.7 |
| | | | 19.2 | -20.4 |
| | | | -3.2 | -31.0 |
| D | 0.68 | 5.18 | 14.0 | -1.0 |
| | | | 4.1 | -8.4 |
| | | | 18.2 | -29.3 |
| | | | 11.2 | -29.1 |
| Repetition pitch x: 28.5 µm y: 37 µm | | | | |
| Production size: 10 × 10 mm | | | | |

An example of an LCD having the above-described reflector 10 is shown in Fig. 7. An LCD 50 is formed of an LCD panel 51. The LCD panel 51 includes a liquid-crystal layer 52, a first substrate 53 and an opposing second substrate 54 that retain the liquid-crystal layer 52 therebetween, and a seal 55 connecting the substrates. The LCD panel 51 further includes electrode layers and orientation films on the first substrate 53 and the second substrate 54 adjacent to the liquid-crystal layer 52 to form display circuits 56 and 57, respectively, that drive the liquid-crystal layer 52.

In addition, a large number of spacers 58 are disposed between the display circuits 56 and 57 to maintain a certain spacing between the circuits. The reflector 10 is formed between the first substrate 53 and the second substrate 54. An overcoating layer 59 is laminated on the top surface of the reflector 10.

According to the above-described structure, the reflector 10 efficiently reflects external light N incident on the LCD panel 51 and illuminates the liquid-crystal layer 52 to produce a clear image without generation of Moire fringes.

## Claims

1. A reflector comprising:
a substrate having a large number of minute hollow portions with arbitrary sizes; and
a reflective film over the substrate, wherein
the substrate has a plurality of surface unit areas with a predetermined unit length on one side ranging from 30 to 3,000 µm; and
each unit area has the same hollow pattern.

2. The reflector according to Claim 1, wherein
the thickness of the reflective film ranges from 0.05 to 0.2 µm.

3. The reflector according to Claim 1 or 2, wherein
the hollow portions are fabricated by a transfer process using an embossed block.

4. The reflector according to Claim 1, 2 or 3, wherein outlines of the hollow portions are linked to each other.

5. The reflector according to any preceding claim, wherein
each of the hollow portions includes parts of two spheres having different radii.

6. The reflector according to Claim 5, wherein
the reflectance of the reflector peaks at an angle smaller than the angle of the regular reflection.

7. A liquid-crystal display comprising:
the reflector according to Claim 1; and
a liquid-crystal display panel.
